# NEUE EUROPÄISCHE PATENTSCHRIFT

(11) **EP 3 485 729 B2**
(45) Veröffentlichungstag und Bekanntmachung des Hinweises auf die Entscheidung über den Einspruch: **28.10.2026**
(45) Hinweis auf die Patenterteilung: 07.06.2023
(21) Anmeldenummer: 18401091.6
(22) Anmeldetag: 02.11.2018
(51) Int. Cl.: A01M 7/00, B05B 1/08, B05B 12/06

(54) **VERFAHREN ZUM AUSBRINGEN EINER SPRITZFLÜSSIGKEIT AUF EINE LANDWIRTSCHAFTLICHE NUTZFLÄCHE**
METHOD FOR APPLYING A LIQUID TO BE SPRAYED ON AN AGRICULTURAL AREA
PROCÉDÉ DE DISTRIBUTION D'UN FLUIDE DE PULVÉRISATION SUR UNE SURFACE UTILE AGRICOLE

(30) Priorität: 10.11.2017 DE 102017126425
(43) Veröffentlichungstag der Anmeldung: 22.05.2019
(73) Patentinhaber: Amazonen-Werke H. Dreyer SE & Co. KG, 49205 Hasbergen (DE)
(72) Erfinder: Austermann, Stefan, 48291 Telgte (DE); Kiefer, Stefan, 49074 Osnabrück (DE); Klemann, Timo, 49191 Belm (DE); Heer, Jochen, 49074 Osnabrück (DE)
(74) Vertreter: Heisel, Per-Christian

(56) Entgegenhaltungen:
- EP-A1- 2 227 949
- EP-A1- 2 957 346
- EP-A1- 2 995 382
- US-A- 5 653 389
- US-A- 5 704 546
- US-A1- 2015 375 247
- US-A1- 2016 227 755
- US-B2- 9 435 458

## Beschreibung

Die Erfindung betrifft ein Verfahren zum Ausbringen einer Spritzflüssigkeit auf eine landwirtschaftliche Nutzfläche mittels eines landwirtschaftlichen Spritzgeräts und ein landwirtschaftliches Spritzgerät, insbesondere eine Feldspritze.

Beim Ausbringen von Spritzflüssigkeit auf eine landwirtschaftliche Nutzfläche ist die Einstellung einer situationsadäquaten und bedarfsgerechten Ausbringmenge von außerordentlicher Wichtigkeit, um gute Ausbringergebnisse zu erzielen und somit eine Ertragssteigerung herbeizuführen.

Aus der Druckschrift EP 2 957 346 A1 ist ein landwirtschaftliches Spritzgerät bekannt. Aus der Druckschrift US 2015/375247 A1 ist ein Steuerungssystem für ein Flüssigkeitssprühsystem bekannt. Aus der Druckschrift EP 2 227 949 A1 ist ein Verfahren zum Betrieb einer agraren Ausbringeinrichtung bekannt.

Zum Anpassen der Ausbringmenge ist es bekannt, den Bereitstellungsdruck der Spritzflüssigkeit an einem oder mehreren Ausbringelementen des landwirtschaftlichen Spritzgeräts zu steuern. Durch eine Erhöhung des Bereitstellungsdrucks der Spritzflüssigkeit wird die Ausbringmenge gesteigert. Durch eine Verringerung des Bereitstellungsdrucks der Spritzflüssigkeit wird die Ausbringmenge reduziert.

Mit der Veränderung des Bereitstellungsdrucks der Spritzflüssigkeit wird jedoch gleichzeitig das Tröpfchenspektrum und somit der Abdrift der ausgebrachten Spritzflüssigkeit und die Benetzung der Pflanzen auf der landwirtschaftlichen Nutzfläche durch die ausgebrachte Spritzflüssigkeit verändert. Um bei hohen und/oder wechselnden Fahrgeschwindigkeiten während des Ausbringvorgangs eine ausreichende Menge von Spritzflüssigkeit ausbringen zu können, war bisher die Einstellung von vergleichsweise hohen Bereitstellungsdrücken der Spritzflüssigkeit notwendig. Ferner war bei variierenden Fahrgeschwindigkeiten eine stetige Anpassung des Bereitstellungsdrucks der Spritzflüssigkeit notwendig. Hohe Bereitstellungsdrücke der Spritzflüssigkeit beeinträchtigen jedoch den Abdrift der ausgebrachten Spritzflüssigkeit und die Benetzung der Pflanzen auf der landwirtschaftlichen Nutzfläche, sodass die Ausbringpräzision und die Wirkung der ausgebrachten Spritzflüssigkeit auf die Pflanzen verringert werden. Dies führt letztendlich zu geringeren Erträgen, sodass hohe Fahrgeschwindigkeiten während des Ausbringvorgangs bisher nicht ohne Weiteres umsetzbar sind.

Aus der Druckschrift US 9 635 848 B2 ist ein Verfahren bekannt, bei welchem die Ausbringmenge an die Fahrgeschwindigkeit angepasst werden kann, indem die Ausbringmenge bei konstantem Bereitstellungsdruck mittels Pulsweitenmodulation an den Ausbringelementen variierbar ist.

Ferner ist aus der Druckschrift US 9 435 458 B2 ein Verfahren bekannt, bei welchem mithilfe des Bereitstellungsdrucks eine auf Umwelteinflüsse abgestimmte Tröpfchengröße eingestellt wird und die Ausbringmenge dann mithilfe von Pulsweitenmodulation an den Ausbringelementen reguliert wird.

Die Druckschrift US 2016/0227755 A1 schlägt vor, die Ausbringmenge mittels Pulsweitenmodulation an den Ausbringelementen umzusetzen und gleichzeitig die Tröpfchengröße über die Variation des Bereitstellungsdrucks zu steuern.

Die bekannten Lösungen steuern während des Ausbringvorgangs entweder den Bereitstellungsdruck der Spritzflüssigkeit oder setzen an den Ausbringelementen eine Pulsweitenmodulation um, wobei während des Ausbringvorgangs stets eine der beiden Einstellungsmöglichkeiten ungenutzt bleibt, da eine geeignete Einstellung vor dem Ausbringvorgang festgelegt wurde.

Mit den bekannten Lösungen sind jedoch noch keine ausreichend hohen Fahrgeschwindigkeiten während des Ausbringvorgangs umsetzbar.

Die der Erfindung zugrunde liegende Aufgabe besteht somit darin, höhere Fahrgeschwindigkeiten beim Ausbringen von Spritzflüssigkeit auf eine landwirtschaftliche Nutzfläche mittels eines landwirtschaftlichen Spritzgeräts zu ermöglichen, ohne dabei das Tröpfchenspektrum der ausgebrachten Spritzflüssigkeit negativ zu beeinflussen.

Die Aufgabe wird gelöst durch das Verfahren des Anspruchs 1.

Die Erfindung macht sich die Erkenntnis zunutze, dass während des Ausbringvorgangs sowohl eine selbsttätige Steuerung des Bereitstellungsdrucks der Spritzflüssigkeit als auch eine selbsttätige Steuerung der Öffnungs- und Schließzeiten des einen oder der mehreren Ausbringelemente mittels Pulsweitenmodulation umgesetzt werden kann, um das Ausbringspektrum des landwirtschaftlichen Spritzgeräts zu erweitern. Hierdurch können insbesondere auch höhere und/oder wechselnde Fahrgeschwindigkeiten umgesetzt werden, ohne die Zerstäubung und somit die Benetzung der Pflanzen negativ zu beeinflussen und/oder den Abdrift der ausgebrachten Spritzflüssigkeit wesentlich zu verändern. Erfindungsgemäß erfolgt das selbsttätige Steuern des Bereitstellungsdrucks der Spritzflüssigkeit und das selbsttätige Steuern der Öffnungs- und Schließzeiten des einen oder der mehreren Ausbringelemente mittels Pulsweitenmodulation gleichzeitig und/oder in Abstimmung aufeinander.

Die Ausbringelemente können jeweils als Ventile oder Düse ausgebildet sein oder ein Ventil oder eine Düse umfassen. Der Bereitstellungsdruck der Spritzflüssigkeit an dem einen oder den mehreren Ausbringelementen beeinflusst den Abdrift der ausgebrachten Spritzflüssigkeit sowie das Tröpfchenspektrum, die Tröpfchengröße, die Zerstäubung und somit die Benetzung der Pflanzen innerhalb der landwirtschaftlichen Nutzfläche. Die Öffnungs- und Schließzeiten des einen oder der mehreren Ausbringelemente beeinflussen hingegen das Tröpfchenspektrum, die Tröpfchengröße und die Zerstäubung nicht. Somit ist eine Anpassung der Ausbringmenge an die Fahrgeschwindigkeit möglich, ohne dass zwangsläufig eine Veränderung der Benetzung der Nutzpflanzen erfolgt.

In einer vorteilhaften Weiterbildung des erfindungsgemäßen Verfahrens umfasst die Pulsweitenmodulation, mittels welcher selbsttätig die Öffnungs- und Schließzeiten des einen oder der mehreren Ausbringelemente gesteuert werden, eine Frequenzmodulation. Mithin werden die Öffnungs- und Schließzeiten des einen oder der mehreren Ausbringelemente mittels Pulsweitenfrequenzmodulation selbsttätig durch das landwirtschaftliche Spritzgerät gesteuert. Durch die zusätzliche Frequenzmodulation können die Öffnungs- und Schließzeiten des einen oder der mehreren Ausbringelemente optimiert und an die vorliegende Situation angepasst werden, sodass eine präzise Einstellung der Ausbringmenge ohne Beeinflussung der Benetzungseigenschaften möglich ist.

In einer besonders bevorzugten Ausführungsform des erfindungsgemäßen Verfahrens erfolgt das selbsttätige Steuern des Bereitstellungsdrucks der Spritzflüssigkeit an dem einen oder den mehreren Ausbringelementen während des Ausbringvorgangs durch das landwirtschaftliche Spritzgerät und/oder das selbsttätige Steuern der Öffnungs- und Schließzeiten des einen oder der mehreren Ausbringelemente mittels Pulsweitenmodulation durch das landwirtschaftliche Spritzgerät in Abhängigkeit der Fahrgeschwindigkeit des landwirtschaftlichen Spritzgeräts. Insbesondere umfasst das Verfahren das Erfassen der Fahrgeschwindigkeit des landwirtschaftlichen Spritzgeräts und/oder der Fahrgeschwindigkeit eines das landwirtschaftliche Spritzgerät tragenden oder ziehenden Fahrzeugs. Mit zunehmender Fahrgeschwindigkeit erhöht sich die notwendige Ausbringmenge an Spritzflüssigkeit, um eine gleichmäßige und homogene Ausbringung der Spritzflüssigkeit beizubehalten. Die alleinige Erhöhung des Bereitstellungsdrucks der Spritzflüssigkeit an dem einen oder den mehreren Ausbringelementen würde zwar zu einer gesteigerten Ausbringmenge führen, jedoch gleichzeitig die Benetzung der Pflanzen negativ beeinflussen. Um eine optimale Benetzung der Pflanzen beizubehalten, sind somit auch die Öffnungs- und Schließzeiten des einen oder der mehreren Ausbringelemente mittels Pulsweitenmodulation oder Pulsweitenfrequenzmodulation anzupassen.

In einer anderen bevorzugten Ausführungsform des erfindungsgemäßen Verfahrens erfolgt das selbsttätige Steuern des Bereitstellungsdrucks der Spritzflüssigkeit an dem einen oder den mehreren Ausbringelementen während des Ausbringvorgangs durch das landwirtschaftliche Spritzgerät und/oder das selbsttätige Steuern der Öffnungs- und Schließzeiten des einen oder der mehreren Ausbringelemente mittels Pulsweitenmodulation durch das landwirtschaftliche Spritzgerät in Abhängigkeit einer eingestellten Ausbringmenge an Spritzflüssigkeit und/oder in Abhängigkeit von Eigenschaften der auszubringenden Spritzflüssigkeit. Insbesondere kann das Verfahren das Bereitstellen einer einzustellenden Ausbringmenge an Spritzflüssigkeit für das landwirtschaftliche Spritzgerät und/oder das Bereitstellen von Eigenschaften der auszubringenden Spritzflüssigkeit für das landwirtschaftliche Spritzgerät umfassen. Die Ausbringmenge an Spritzflüssigkeit kann beispielsweise in Volumen pro Fläche eingestellt werden. Die Eigenschaften der auszubringenden Spritzflüssigkeit können beispielsweise die Zerstäubungseigenschaften der auszubringenden Spritzflüssigkeit umfassen. Alternativ oder zusätzlich kann das selbsttätige Steuern des Bereitstellungsdrucks der Spritzflüssigkeit an dem einen oder den mehreren Ausbringelementen während des Ausbringvorgangs durch das landwirtschaftliche Spritzgerät und/oder das selbsttätige Steuern der Öffnungs- und Schließzeiten des einen oder der mehreren Ausbringelemente mittels Pulsweitenmodulation durch das landwirtschaftliche Spritzgerät auch in Abhängigkeit von Eigenschaften des einen oder der mehreren Ausbringelemente erfolgen. Beispielsweise umfassen die Eigenschaften des einen oder der mehreren Ausbringelemente deren Düsentyp, Düsenform und/oder Düsengröße und/oder Betriebskennzahlen, wie etwa einen zulässigen Druckbereich, welcher an dem einen oder den mehreren Ausbringelementen eingestellt werden darf.

In einer anderen Ausführungsform des erfindungsgemäßen Verfahrens wird eine Eingabemöglichkeit für den Nutzer des landwirtschaftlichen Spritzgeräts zur Vorgabe einer Ausbringmenge an Spritzflüssigkeit bereitgestellt. Alternativ oder zusätzlich wird eine Eingabemöglichkeit für den Nutzer des landwirtschaftlichen Spritzgeräts zur Eingabe von Eigenschaften der auszubringenden Spritzflüssigkeit bereitgestellt. Die Vorgabe einer Ausbringmenge an Spritzflüssigkeit und/oder die Eingabe von Eigenschaften der auszubringenden Spritzflüssigkeit kann beispielsweise über eine Eingabeeinrichtung, beispielsweise einen Touchscreen, an dem landwirtschaftlichen Spritzgerät oder innerhalb einer Fahrerkabine eines das landwirtschaftliche Spritzgerät ziehenden oder tragenden Fahrzeugs erfolgen. Alternativ oder zusätzlich kann die Vorgabe einer Ausbringmenge an Spritzflüssigkeit und/oder die Eingabe von Eigenschaften der auszubringenden Spritzflüssigkeit auch über ein mobiles Endgerät, wie etwa ein Smartphone oder Tablet, erfolgen, welches signalleitend mit dem landwirtschaftlichen Spritzgerät verbunden ist. Alternativ oder zusätzlich kann die Vorgabe einer Ausbringmenge an Spritzflüssigkeit und/oder die Eingabe von Eigenschaften der auszubringenden Spritzflüssigkeit über ein Farm-Management-System erfolgen, mittels welchem ein Nutzer seine landwirtschaftlichen Nutzflächen und/oder seine landwirtschaftlichen Arbeitsgeräte verwalten kann.

Ferner ist ein Verfahren erfindungsgemäß, bei welchem das selbsttätige Steuern des Bereitstellungsdrucks der Spritzflüssigkeit an dem einen oder den mehreren Ausbringelementen während des Ausbringvorgangs durch das landwirtschaftliche Spritzgerät das Einstellen eines Basiswerts für den Bereitstellungsdruck der Spritzflüssigkeit an dem einen oder den mehreren Ausbringelementen umfasst. Alternativ oder zusätzlich umfasst das selbsttätige Steuern des Bereitstellungsdrucks der Spritzflüssigkeit an dem einen oder den mehreren Ausbringelementen während des Ausbringvorgangs durch das landwirtschaftliche Spritzgerät das Erhöhen, insbesondere das temporäre Erhöhen, des Bereitstellungsdrucks der Spritzflüssigkeit an dem einen oder den mehreren Ausbringelementen über den Basiswert und/oder das Verringern, insbesondere das temporäre Verringern, des Bereitstellungsdrucks der Spritzflüssigkeit an dem einen oder den mehreren Ausbringelementen unter den Basiswert. Ausgehend von dem Basiswert für den Bereitstellungsdruck kann somit die Ausbringmenge an Spritzflüssigkeit durch Erhöhen des Bereitstellungsdrucks über den Basiswert gesteigert und durch Verringern des Bereitstellungsdrucks unter den Basiswert reduziert werden.

Darüber hinaus ist ein erfindungsgemäßes Verfahren vorteilhaft, bei welchem ein einzuhaltender Druckbereich für den Bereitstellungsdruck der Spritzflüssigkeit an dem einen oder den mehreren Ausbringelementen vorgebbar ist und das selbsttätige Steuern des Bereitstellungsdrucks der Spritzflüssigkeit an dem einen oder den mehreren Ausbringelementen während des Ausbringvorgangs durch das landwirtschaftliche Spritzgerät innerhalb des einzuhaltenden Druckbereichs erfolgt. Der Maximaldruck und/oder der Minimaldruck des einzuhaltenden Druckbereichs kann beispielsweise durch die Konstruktion des einen oder der mehreren Ausbringelemente vorgegeben werden. Alternativ oder zusätzlich kann der Maximaldruck und/oder der Minimaldruck des einzuhaltenden Druckbereichs von den Zerstäubungseigenschaften der auszubringenden Spritzflüssigkeit oder von den Leitungseigenschaften des Leitungssystems des landwirtschaftlichen Spritzgeräts abhängig sein.

Im erfindungsgemäßen Verfahren sind für unterschiedliche Ausbringsituationen verschiedene einzuhaltende Druckbereiche für den Bereitstellungsdruck der Spritzflüssigkeit an dem einen oder den mehreren Ausbringelementen vorgebbar und das selbsttätige Steuern des Bereitstellungsdrucks der Spritzflüssigkeit an dem einen oder den mehreren Ausbringelementen erfolgt in der jeweiligen Ausbringsituation durch das landwirtschaftliche Spritzgerät innerhalb des für die Ausbringsituation vorgegebenen einzuhaltenden Druckbereichs. Während des Ausbringens von Spritzflüssigkeit ergeben sich unterschiedliche Ausbringsituationen, inmitten der landwirtschaftlichen Nutzfläche, am Rand der landwirtschaftlichen Nutzfläche oder im Vorgewende der landwirtschaftlichen Nutzfläche. Zur bedarfsorientierten Ausbringung der Spritzflüssigkeit sind in einigen Ausbringsituationen einzelne Ausbringelemente oder eine oder mehrere Gruppen von Ausbringelementen zu deaktivieren, um eine Fehlausbringung der Spritzflüssigkeit zu verhindern. Ferner ergibt sich eine weitere zu berücksichtigende Ausbringsituation während der Kurvenfahrt des landwirtschaftlichen Spritzgeräts, da sich während der Kurvenfahrt an unterschiedlichen Ausbringelementen verschiedene Fahrgeschwindigkeiten einstellen. Somit ist an den kurvenäußeren Ausbringelementen beispielsweise ein höherer Druck als an den kurveninneren Ausbringelementen einzustellen, wobei eine entsprechende Anpassung der Öffnungs- und Schließzeiten der entsprechenden Ausbringelemente mittels Pulsweitenmodulation oder Pulsweitenfrequenzmodulation notwendig ist. Die Einstellung von geeigneten Bereitstellungsdrücken der Spritzflüssigkeit und geeigneten Öffnungs- und Schließzeiten erfolgt unter Verwendung von Kartenmaterial, wobei das Kartenmaterial Informationen über die landwirtschaftliche Nutzfläche beinhaltet. Insbesondere kann das Kartenmaterial eine Applikationskarte umfassen, aus welcher Fahrspurinformationen und/oder Pflanzen-Positionsinformationen ableitbar sind.

In einer besonders bevorzugten Ausführungsform des erfindungsgemäßen Verfahrens umfasst das selbsttätige Steuern der Öffnungs- und Schließzeiten des einen oder der mehreren Ausbringelemente mittels Pulsweitenmodulation durch das landwirtschaftliche Spritzgerät das Einstellen einer Basismodulation für die Öffnungs- und Schließzeiten des einen oder der mehreren Ausbringelemente, das Verändern, insbesondere das temporäre Verändern, der Öffnungszeit des einen oder der mehreren Ausbringelemente pro Periodendauer gegenüber der Öffnungszeit des einen oder der mehreren Ausbringelemente pro Periodendauer der Basismodulation und/oder das Verändern, insbesondere das temporäre Verändern, der Schließzeit des einen oder der mehreren Ausbringelemente pro Periodendauer gegenüber der Schließzeit des einen oder der mehreren Ausbringelemente pro Periodendauer der Basismodulation. Alternativ oder zusätzlich umfasst das selbsttätige Steuern der Öffnungs- und Schließzeiten des einen oder der mehreren Ausbringelemente mittels Pulsweitenmodulation durch das landwirtschaftliche Spritzgerät das Verändern, insbesondere das temporäre Verändern, der Periodendauer der Pulsweitenmodulation gegenüber der Periodendauer der Basismodulation und/oder das Verändern, insbesondere das temporäre Verändern, der Modulationsfrequenz der Pulsweitenmodulation gegenüber der Modulationsfrequenz der Basismodulation.

Die Öffnungszeit des einen oder der mehreren Ausbringelemente ist die Zeitdauer, in welcher das eine oder die mehreren Ausbringelemente pro Periodendauer geöffnet sind. Die Schließzeit des einen oder der mehreren Ausbringelemente ist die Zeitdauer, in welcher das eine oder die mehreren Ausbringelemente pro Periodendauer geschlossen sind. Die Periodendauer umfasst jeweils eine Öffnungszeit und eine Schließzeit des einen oder der mehreren Ausbringelemente, welche aufeinander folgen.

Das Verändern der Öffnungszeit des einen oder der mehreren Ausbringelemente pro Periodendauer gegenüber der Öffnungszeit des einen oder der mehreren Ausbringelemente pro Periodendauer der Basismodulation kann das Verlängern und/oder das Verkürzen des offenen Zustands des einen oder der mehreren Ausbringelemente pro Periodendauer umfassen. Das Verändern der Schließzeit des einen oder der mehreren Ausbringelemente pro Periodendauer gegenüber der Schließzeit des einen oder der mehreren Ausbringelemente pro Periodendauer der Basismodulation kann das Verlängern und/oder das Verkürzen des geschlossenen Zustands des einen oder der mehreren Ausbringelemente pro Periodendauer umfassen. Das Verändern der Periodendauer der Pulsweitenmodulation gegenüber der Periodendauer der Basismodulation kann das Verlängern und/oder das Verkürzen der Periodendauer gegenüber der Periodendauer der Basismodulation umfassen. Das Verändern der Modulationsfrequenz der Pulsweitenmodulation gegenüber der Modulationsfrequenz der Basismodulation kann das Erhöhen und/oder das Verringern der Modulationsfrequenz gegenüber der Modulationsfrequenz der Basismodulation umfassen. Insbesondere bedingt ein Verändern der Periodendauer der Pulsweitenmodulation ein Verändern der Modulationsfrequenz der Pulsweitenmodulation.

Im erfindungsgemäßen Verfahren weist das eine oder weisen die mehreren Ausbringelemente jeweils zumindest eine Ausbringöffnung für die Spritzflüssigkeit auf, wobei zumindest eine Eigenschaft der zumindest einen Ausbringöffnung für die Spritzflüssigkeit des einen oder der mehreren Ausbringelemente durch das landwirtschaftliche Spritzgerät selbsttätig gesteuert wird. Durch das selbsttätige Steuern der zumindest einen Eigenschaft der zumindest einen Ausbringöffnung für die Spritzflüssigkeit können die Ausbringmenge, die Zerstäubungseigenschaften und/oder der Abdrift der Spritzflüssigkeit verändert werden. Erfindungsgemäss erfolgt das selbsttätige Steuern der zumindest einen Eigenschaft der zumindest einen Ausbringöffnung für die Spritzflüssigkeit, das selbsttätige Steuern des Bereitstellungsdrucks der Spritzflüssigkeit und/oder das selbsttätige Steuern der Öffnungs- und Schließzeiten des einen oder der mehreren Ausbringelemente mittels Pulsweitenmodulation gleichzeitig und/oder in Abstimmung aufeinander.

Die zumindest eine Ausbringöffnung kann beispielsweise eine Düsenöffnung sein, wenn das eine oder die mehreren Ausbringelemente als Spritzdüsen ausgebildet sind oder eine Spritzdüse umfassen. Die zumindest eine Eigenschaft der zumindest einen Ausbringöffnung kann die Größe, insbesondere den Durchmesser, der Ausbringöffnung für die Spritzflüssigkeit und/oder die Form der Ausbringöffnung für die Spritzflüssigkeit umfassen.

In erfindungsgemäßen Verfahren umfasst das selbsttätige Steuern zumindest einer Eigenschaft der zumindest einen Ausbringöffnung für die Spritzflüssigkeit des einen oder der mehreren Ausbringelemente durch das landwirtschaftliche Spritzgerät das selbsttätige Ändern eines Zustands einer Blende, welche die Ausbringöffnung für die Spritzflüssigkeit eines Ausbringelements trägt, zur Änderung der Größe der Ausbringöffnung für die Spritzflüssigkeit. Insbesondere weist die Blende des Ausbringelements oder weisen die Blenden der Ausbringelemente eine variable Öffnungsweite auf. Vorzugsweise behält die Ausbringöffnung bei einer Größenänderung ihre Grundform, also beispielsweise ihre kreisförmige Grundform, und/oder ihren Öffnungsmittelpunkt bei. Erfindungsgemäß ist die eine oder sind die mehreren Blenden jeweils als Irisblenden ausgebildet. Alternativ oder zusätzlich umfasst das selbsttätige Steuern zumindest einer Eigenschaft der zumindest einen Ausbringöffnung für die Spritzflüssigkeit des einen oder der mehreren Ausbringelemente durch das landwirtschaftliche Spritzgerät das selbsttätige Bewegen, insbesondere Verschieben und/oder Drehen, einer Blende des einen oder der mehreren Ausbringelemente, welche mehrere unterschiedliche Ausbringöffnungen für die Spritzflüssigkeit eines Ausbringelements trägt. Vorzugsweise weist die Blende oder weisen die Blenden Ausbringöffnungen mit unterschiedlichen Größen und/oder Formen auf, welche durch Bewegen der jeweiligen Blende genutzt werden können. Alternativ oder zusätzlich umfasst das selbsttätige Steuern zumindest einer Eigenschaft der zumindest einen Ausbringöffnung für die Spritzflüssigkeit des einen oder der mehreren Ausbringelemente durch das landwirtschaftliche Spritzgerät das selbsttätige Wechseln einer Blende des einen oder der mehreren Ausbringelemente, welche die Ausbringöffnung für die Spritzflüssigkeit eines Ausbringelements trägt. Vorzugsweise sind an dem einen oder den mehreren Ausbringelementen jeweils mehrere Blenden angeordnet, mittels welchen die Spritzflüssigkeitsausbringung beeinflusst werden kann. Die unterschiedlichen Blenden können durch Bewegen der Blenden gewechselt werden. Beispielsweise tragen die jeweiligen Blenden Ausbringöffnungen mit unterschiedlichen Größen und/oder Formen.

Die der Erfindung zugrunde liegende Aufgabe wird ferner durch das landwirtschaftliche Spritzgerät des Anspruchs 8 gelöst. Hinsichtlich der Vorteile und Modifikationen des erfindungsgemäßen landwirtschaftlichen Spritzgeräts wird auf die Vorteile und Modifikationen des erfindungsgemäßen Verfahrens verwiesen.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Spritzgeräts in einer perspektivischen Darstellung; und
- Fig. 2: Arbeitsparameter während des Ausführens des erfindungsgemäßen Verfahrens in einer schematischen Darstellung.

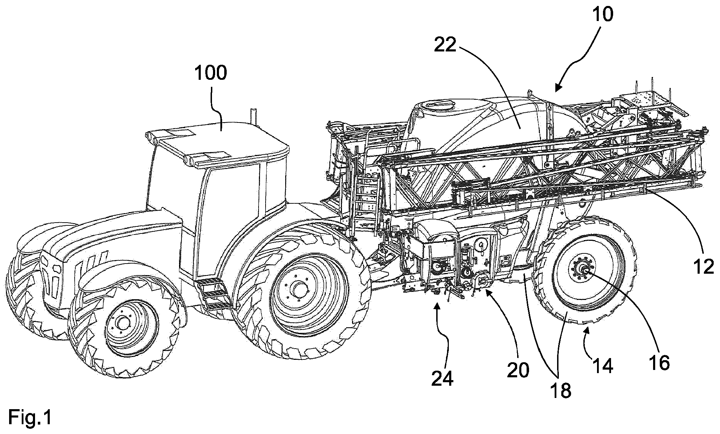

Die Fig. 1 zeigt ein als Feldspritze ausgebildetes landwirtschaftliches Spritzgerät 10, welches von einem als Traktor ausgebildeten Fahrzeug 100 gezogen wird.

Das landwirtschaftliche Spritzgerät 10 weist ein Spritzgestänge 12 auf, welches mehrere zueinander verschwenkbare Gestängeabschnitte aufweist. An dem Spritzgestänge sind mehrere als Spritzdüsen ausgebildete Ausbringelemente angeordnet.

In dem dargestellten Zustand befindet sich das Spritzgestänge 12 in einer Transportstellung, sodass das landwirtschaftliche Spritzgerät 10 die zulässige Transtransportbreite nicht überschreitet. Durch ein Verschwenken der Gestängeabschnitte lassen sich diese im Wesentlichen quer zur Fahrtrichtung des landwirtschaftlichen Spritzgeräts 10 ausrichten, sodass sich Arbeitsbreiten von beispielsweise 15 bis 40 Meter realisieren lassen. Außerdem weist das landwirtschaftliche Spritzgerät 10 ein Fahrwerk 14 auf, welches eine Achse 16 und zwei Räder 18 aufweist.

Auf dem Rahmen 20 des landwirtschaftlichen Spritzgeräts 10 sind ein Vorratsbehälter 22 für eine Trägerflüssigkeit und eine Steuerungseinrichtung 24 angeordnet. Die Steuerungseinrichtung 24 ist dazu eingerichtet, den Bereitstellungsdruck p einer Spritzflüssigkeit an den Ausbringelementen und die Öffnungs- und Schließzeiten der Ausbringelemente mittels Pulsweitenmodulation PWM selbsttätig während des Ausbringvorgangs zu steuern.

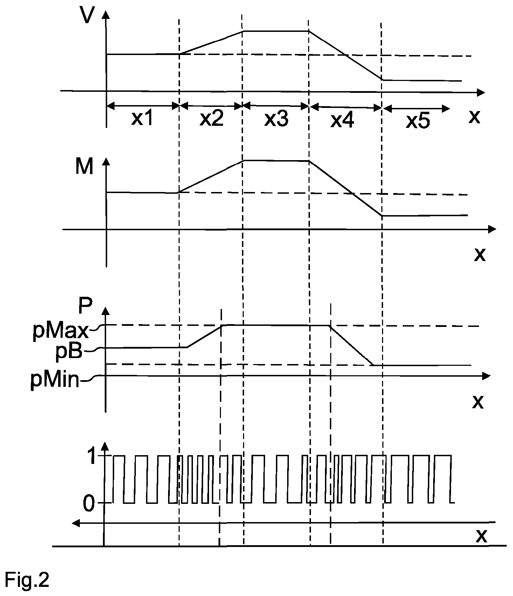

Die Fig. 2 zeigt die Veränderung der Fahrgeschwindigkeit v, der Ausbringmenge M, des Bereitstellungsdrucks p der Spritzflüssigkeit und des Öffnungs- und Schließzustands einer Ausbringeinheit eines landwirtschaftlichen Spritzgeräts 10 entlang eines Fahrwegs x während des Ausführens des Verfahrens zum Ausbringen einer Spritzflüssigkeit auf eine landwirtschaftliche Nutzfläche.

Während des Verfahrens wird der Ausbringeinheit eine auszubringende Spritzflüssigkeit bereitgestellt, wobei der Bereitstellungsdruck p der Spritzflüssigkeit an dem Ausbringelement und die Öffnungs- und Schließzeiten des Ausbringelements während des Ausbringvorgangs selbsttätig und in Abhängigkeit der Fahrgeschwindigkeit v durch das landwirtschaftliche Spritzgerät 10 gesteuert werden. Die entsprechenden Änderungen des Bereitstellungsdrucks p der Spritzflüssigkeit an dem Ausbringelement und der Öffnungs- und Schließzeiten des Ausbringelements bewirken eine Änderung der Ausbringmenge M, ohne dass die Zerstäubung der Spritzflüssigkeit negativ durch die Ausbringmengenänderung beeinflusst wird.

Das selbsttätige Steuern der Öffnungs- und Schließzeiten des Ausbringelements erfolgt mittels Pulsweitenmodulation PWM, wobei die Pulsweitenmodulation PWM auch eine Frequenzmodulation umfasst, sodass eine Pulsweitenfrequenzmodulation umgesetzt wird.

Der Fahrweg x unterteilt sich in die Wegabschnitte x1-x5.

Während des Durchfahrens des Wegabschnitts x1 wird zunächst ein Basiswert pB für den Bereitstellungsdruck p der Spritzflüssigkeit an dem Ausbringelement eingestellt, welcher der Fahrgeschwindigkeit v des landwirtschaftlichen Spritzgeräts 10 innerhalb des Wegabschnitts x1 zugeordnet ist. Ferner wird eine Basismodulation für die Öffnungs- und Schließzeiten des Ausbringelements eingestellt, welche der Fahrgeschwindigkeit v des landwirtschaftlichen Spritzgeräts innerhalb des Wegabschnitts x1 oder dem eingestellten Bereitstellungsdruck p der Spritzflüssigkeit an dem Ausbringelement zugeordnet ist. Aus dem eingestellten Bereitstellungsdruck p der Spritzflüssigkeit an dem Ausbringelement und den eingestellten Öffnungs- und Schließzeiten des Ausbringelements ergibt sich eine Ausbringmenge M, welche von dem Ausbringelement während des Durchfahrens des Wegabschnitts x1 ausgebracht wird.

Während des Durchfahrens des Wegabschnitts x2 wird die Fahrgeschwindigkeit v des landwirtschaftlichen Spritzgeräts 10 gesteigert, sodass der Bereitstellungsdruck p der Spritzflüssigkeit an dem Ausbringelement selbsttätig durch das landwirtschaftliche Spritzgerät 10 über den Basiswert pB erhöht wird. Zu beachten ist, dass ein einzuhaltender Druckbereich mit einem Minimaldruck pMin und einem Maximaldruck pMax für den Bereitstellungsdruck p der Spritzflüssigkeit an dem Ausbringelement vorgegeben ist, sodass nach Erreichen des Maximaldrucks pMax der Bereitstellungsdruck p der Spritzflüssigkeit an dem Ausbringelement nicht weiter gesteigert sondern konstant gehalten wird. Außerdem werden die Öffnungszeiten und die Schließzeiten des Ausbringelements pro Periodendauer während des Durchfahrens des Wegabschnitts x2 verändert. Darüber hinaus werden die Periodendauer der Pulsweitenmodulation PWM und die Modulationsfrequenz der Pulsweitenmodulation PWM während des Durchfahrens des Wegabschnitts x2 verändert.

Während des Durchfahrens des Wegabschnitts x3 wird die Fahrgeschwindigkeit v konstant gehalten. Entsprechend werden auch der Bereitstellungsdruck p der Spritzflüssigkeit an dem Ausbringelement und die Öffnungs- und Schließzeiten des Ausbringelements konstant gehalten.

Während des Durchfahrens des Wegabschnitts x4 wird die Fahrgeschwindigkeit v des landwirtschaftlichen Spritzgeräts 10 wieder verringert, sodass der Bereitstellungsdruck p der Spritzflüssigkeit an dem Ausbringelement selbsttätig durch das landwirtschaftliche Spritzgerät 10 reduziert wird, vorliegend unter den Basiswert pB. Zu beachten ist auch in diesem Fall der einzuhaltende Druckbereich für den Bereitstellungsdruck p der Spritzflüssigkeit an dem Ausbringelement, sodass nach Erreichen des Minimaldrucks pMin der Bereitstellungsdruck p der Spritzflüssigkeit an dem Ausbringelement nicht weiter verringert sondern konstant gehalten wird. Außerdem werden die Öffnungszeiten und die Schließzeiten des Ausbringelements pro Periodendauer während des Durchfahrens des Wegabschnitts x4 verändert. Darüber hinaus werden die Periodendauer der Pulsweitenmodulation PWM und die Modulationsfrequenz der Pulsweitenmodulation PWM während des Durchfahrens des Wegabschnitts x4 verändert.

Während des Durchfahrens des Wegabschnitts x5 wird die Fahrgeschwindigkeit v konstant gehalten. Entsprechend werden auch der Bereitstellungsdruck p der Spritzflüssigkeit an dem Ausbringelement und die Öffnungs- und Schließzeiten des Ausbringelements konstant gehalten.

### Bezugszeichenliste

- 10: landwirtschaftliches Spritzgerät
- 12: Spritzgestänge
- 14: Fahrwerk
- 16: Achse
- 18: Räder
- 20: Rahmen
- 22: Vorratsbehälter
- 24: Steuerungseinrichtung

- 100: Fahrzeug

- x: Fahrweg
- x1-x5: Wegabschnitte
- v: Fahrgeschwindigkeit
- M: Ausbringmenge
- p: Bereitstellungsdruck
- pB: Basiswert für den Bereitstellungsdruck
- pMax: Maximaldruck des einzuhaltenden Druckbereichs
- pMin: Minimaldruck des einzuhaltenden Druckbereichs
- PWM: Pulsweitenmodulation

## Patentansprüche

1. Verfahren zum Ausbringen einer Spritzflüssigkeit auf eine landwirtschaftliche Nutzfläche mittels eines landwirtschaftlichen Spritzgeräts (10), mit den Schritten:
- Bereitstellen einer auszubringenden Spritzflüssigkeit an einem oder mehreren Ausbringelementen des landwirtschaftlichen Spritzgeräts (10);
- selbsttätiges Steuern des Bereitstellungsdrucks (p) der Spritzflüssigkeit an dem einen oder den mehreren Ausbringelementen während des Ausbringvorgangs durch das landwirtschaftliche Spritzgerät (10); und
- selbsttätiges Steuern der Öffnungs- und Schließzeiten des einen oder der mehreren Ausbringelemente mittels Pulsweitenmodulation (PWM) durch das landwirtschaftliche Spritzgerät (10), wobei das selbsttätige Steuern des Bereitstellungsdrucks der Spritzflüssigkeit und das selbsttätige Steuern der Öffnungs- und Schließzeiten des einen oder der mehreren Ausbringelemente mittels Pulsweitenmodulation gleichzeitig und/oder in Abstimmung aufeinander erfolgt,
wobei das selbsttätige Steuern des Bereitstellungsdrucks (p) der Spritzflüssigkeit an dem einen oder den mehreren Ausbringelementen während des Ausbringvorgangs durch das landwirtschaftliche Spritzgerät (10) einen, mehrere oder sämtliche der folgenden Schritte umfasst:
- Einstellen eines Basiswerts (pB) für den Bereitstellungsdruck (p) der Spritzflüssigkeit an dem einen oder den mehreren Ausbringelementen;
- Erhöhen, insbesondere temporäres Erhöhen, des Bereitstellungsdrucks (p) der Spritzflüssigkeit an dem einen oder den mehreren Ausbringelementen über den Basiswert (pB);
- Verringern, insbesondere temporäres Verringern, des Bereitstellungsdrucks (p) der Spritzflüssigkeit an dem einen oder den mehreren Ausbringelementen unter den Basiswert (pB);
wobei für unterschiedliche Ausbringsituationen verschiedene einzuhaltende Druckbereiche für den Bereitstellungsdruck (p) der Spritzflüssigkeit an dem einen oder den mehreren Ausbringelementen vorgebbar sind und das selbsttätige Steuern des Bereitstellungsdrucks (p) der Spritzflüssigkeit an dem einen oder den mehreren Ausbringelementen in der jeweiligen Ausbringsituation durch das landwirtschaftliche Spritzgerät (10) innerhalb des für die Ausbringsituation vorgegebenen einzuhaltenden Druckbereichs erfolgt, wobei sich während des Ausbringens von Spritzflüssigkeit unterschiedliche Ausbringsituationen, inmitten der landwirtschaftlichen Nutzfläche, am Rand der landwirtschaftlichen Nutzfläche oder im Vorgewende der landwirtschaftlichen Nutzfläche, ergeben, und wobei zur bedarfsorientierten Ausbringung der Spritzflüssigkeit in einigen Ausbringsituationen einzelne Ausbringelemente oder eine oder mehrere Gruppen von Ausbringelementen zu deaktivieren sind, um eine Fehlausbringung der Spritzflüssigkeit zu verhindern, wobei die Einstellung von geeigneten Bereitstellungsdrücken der Spritzflüssigkeit und geeigneten Öffnungs- und Schließzeiten unter Verwendung von Kartenmaterial erfolgt, wobei das Kartenmaterial Informationen über die landwirtschaftliche Nutzfläche beinhaltet, insbesondere eine Applikationskarte umfasst, aus welcher Fahrspurinformationen und/oder Pflanzen-Positionsinformation ableitbar sind,
wobei das eine oder die mehreren Ausbringelemente jeweils zumindest eine Ausbringöffnung für die Spritzflüssigkeit aufweisen; **gekennzeichnet durch** den Schritt:
- selbsttätiges Steuern zumindest einer Eigenschaft der zumindest einen Ausbringöffnung für die Spritzflüssigkeit des einen oder der mehreren Ausbringelemente durch das landwirtschaftliche Spritzgerät (10), und wobei das selbsttätige Steuern zumindest einer Eigenschaft der zumindest einen Ausbringöffnung für die Spritzflüssigkeit des einen oder der mehreren Ausbringelemente durch das landwirtschaftliche Spritzgerät (10) umfasst:
- selbsttätiges Ändern eines Zustands einer Blende, welche die Ausbringöffnung für die Spritzflüssigkeit eines Ausbringelements trägt, zur Änderung der Größe der Ausbringöffnung für die Spritzflüssigkeit, wobei die Blende als Irisblende ausgebildet ist.

2. Verfahren nach Anspruch 1,
**dadurch gekennzeichnet, dass** die Pulsweitenmodulation (PWM), mittels welcher selbsttätig die Öffnungs- und Schließzeiten des einen oder der mehreren Ausbringelemente gesteuert werden, eine Frequenzmodulation umfasst.

3. Verfahren nach Anspruch 1 oder 2,
**dadurch gekennzeichnet, dass** das selbsttätige Steuern des Bereitstellungsdrucks (p) der Spritzflüssigkeit an dem einen oder den mehreren Ausbringelementen während des Ausbringvorgangs durch das landwirtschaftliche Spritzgerät (10) und/oder das selbsttätige Steuern der Öffnungs- und Schließzeiten des einen oder der mehreren Ausbringelemente mittels Pulsweitenmodulation (PWM) durch das landwirtschaftliche Spritzgerät (10) in Abhängigkeit der Fahrgeschwindigkeit (v) des landwirtschaftlichen Spritzgeräts (10) erfolgt.

4. Verfahren nach einem der vorstehenden Ansprüche,
**dadurch gekennzeichnet, dass** das selbsttätige Steuern des Bereitstellungsdrucks (p) der Spritzflüssigkeit an dem einen oder den mehreren Ausbringelementen während des Ausbringvorgangs durch das landwirtschaftliche Spritzgerät (10) und/oder das selbsttätige Steuern der Öffnungs- und Schließzeiten des einen oder der mehreren Ausbringelemente mittels Pulsweitenmodulation (PWM) durch das landwirtschaftliche Spritzgerät (10) in Abhängigkeit einer eingestellten Ausbringmenge (M) an Spritzflüssigkeit und/oder in Abhängigkeit von Eigenschaften der auszubringenden Spritzflüssigkeit erfolgt.

5. Verfahren nach einem der vorstehenden Ansprüche,
**gekennzeichnet durch** zumindest einen der folgenden Schritte:
- Bereitstellen einer Eingabemöglichkeit für den Nutzer des landwirtschaftlichen Spritzgeräts (10) zur Vorgabe einer Ausbringmenge (M) an Spritzflüssigkeit;
- Bereitstellen einer Eingabemöglichkeit für den Nutzer des landwirtschaftlichen Spritzgeräts (10) zur Eingabe von Eigenschaften der auszubringenden Spritzflüssigkeit.

6. Verfahren nach einem der vorstehenden Ansprüche,
**dadurch gekennzeichnet, dass** ein einzuhaltender Druckbereich für den Bereitstellungsdruck (p) der Spritzflüssigkeit an dem einen oder den mehreren Ausbringelementen vorgebbar ist und das selbsttätige Steuern des Bereitstellungsdrucks (p) der Spritzflüssigkeit an dem einen oder den mehreren Ausbringelementen während des Ausbringvorgangs durch das landwirtschaftliche Spritzgerät (10) innerhalb des einzuhaltenden Druckbereichs erfolgt.

7. Verfahren nach einem der vorstehenden Ansprüche,
**dadurch gekennzeichnet, dass** das selbsttätige Steuern der Öffnungs- und Schließzeiten des einen oder der mehreren Ausbringelemente mittels Pulsweitenmodulation (PWM) durch das landwirtschaftliche Spritzgerät (10) einen, mehrere oder sämtliche der folgenden Schritte umfasst:
- Einstellen einer Basismodulation für die Öffnungs- und Schließzeiten des einen oder der mehreren Ausbringelemente;
- Verändern, insbesondere temporäres Verändern, der Öffnungszeit des einen oder der mehreren Ausbringelemente pro Periodendauer gegenüber der Öffnungszeit des einen oder der mehreren Ausbringelemente pro Periodendauer der Basismodulation;
- Verändern, insbesondere temporäres Verändern, der Schließzeit des einen oder der mehreren Ausbringelemente pro Periodendauer gegenüber der Schließzeit des einen oder der mehreren Ausbringelemente pro Periodendauer der Basismodulation;
- Verändern, insbesondere temporäres Verändern, der Periodendauer der Pulsweitenmodulation (PWM) gegenüber der Periodendauer der Basismodulation;
- Verändern, insbesondere temporäres Verändern, der Modulationsfrequenz der Pulsweitenmodulation (PWM) gegenüber der Modulationsfrequenz der Basismodulation.

8. Landwirtschaftliches Spritzgerät (10), insbesondere Feldspritze, ausgebildet zum Ausführen des Verfahrens zum Ausbringen einer Spritzflüssigkeit auf eine landwirtschaftliche Nutzfläche nach einem der verstehenden Ansprüche mit
- einem oder mehreren Ausbringelementen zum Ausbringen einer Spritzflüssigkeit auf eine landwirtschaftliche Nutzfläche; und
- einer Steuerungseinrichtung (24), welche dazu eingerichtet ist, den Bereitstellungsdruck (p) der Spritzflüssigkeit an dem einen oder den mehreren Ausbringelementen und die Öffnungs- und Schließzeiten des einen oder der mehreren Ausbringelemente mittels Pulsweitenmodulation (PWM) selbsttätig während des Ausbringvorgangs zu steuern, wobei das selbsttätige Steuern des Bereitstellungsdrucks der Spritzflüssigkeit und das selbsttätige Steuern der Öffnungs- und Schließzeiten des einen oder der mehreren Ausbringelemente mittels Pulsweitenmodulation gleichzeitig und/oder in Abstimmung aufeinander erfolgt, wobei das selbsttätige Steuern des Bereitstellungsdrucks (p) der Spritzflüssigkeit an dem einen oder den mehreren Ausbringelementen während des Ausbringvorgangs durch das landwirtschaftliche Spritzgerät (10) einen, mehrere oder sämtliche der folgenden Schritte umfasst:
- Einstellen eines Basiswerts (pB) für den Bereitstellungsdruck (p) der Spritzflüssigkeit an dem einen oder den mehreren Ausbringelementen;
- Erhöhen, insbesondere temporäres Erhöhen, des Bereitstellungsdrucks (p) der Spritzflüssigkeit an dem einen oder den mehreren Ausbringelementen über den Basiswert (pB);
- Verringern, insbesondere temporäres Verringern, des Bereitstellungsdrucks (p) der Spritzflüssigkeit an dem einen oder den mehreren Ausbringelementen unter den Basiswert (pB) und wobei für unterschiedliche Ausbringsituationen verschiedene einzuhaltende Druckbereiche für den Bereitstellungsdruck (p) der Spritzflüssigkeit an dem einen oder den mehreren Ausbringelementen vorgebbar sind und das selbsttätige Steuern des Bereitstellungsdrucks (p) der Spritzflüssigkeit an dem einen oder den mehreren Ausbringelementen in der jeweiligen Ausbringsituation durch das landwirtschaftliche Spritzgerät (10) innerhalb des für die Ausbringsituation vorgegebenen einzuhaltenden Druckbereichs erfolgt, wobei sich während des Ausbringens von Spritzflüssigkeit unterschiedliche Ausbringsituationen, inmitten der landwirtschaftlichen Nutzfläche, am Rand der landwirtschaftlichen Nutzfläche oder im Vorgewende der landwirtschaftlichen Nutzfläche, ergeben, und wobei zur bedarfsorientierten Ausbringung der Spritzflüssigkeit in einigen Ausbringsituationen einzelne Ausbringelemente oder eine oder mehrere Gruppen von Ausbringelementen zu deaktivieren sind, um eine Fehlausbringung der Spritzflüssigkeit zu verhindern, wobei die Einstellung von geeigneten Bereitstellungsdrücken der Spritzflüssigkeit und geeigneten Öffnungs- und Schließzeiten unter Verwendung von Kartenmaterial erfolgt, wobei das Kartenmaterial Informationen über die landwirtschaftliche Nutzfläche beinhaltet, insbesondere eine Applikationskarte umfasst, aus welcher Fahrspurinformationen und/oder Pflanzen-Positionsinformation ableitbar sind,
wobei das eine oder die mehreren Ausbringelemente jeweils zumindest eine Ausbringöffnung für die Spritzflüssigkeit aufweisen; **gekennzeichnet durch** den Schritt:
- selbsttätiges Steuern zumindest einer Eigenschaft der zumindest einen Ausbringöffnung für die Spritzflüssigkeit des einen oder der mehreren Ausbringelemente durch das landwirtschaftliche Spritzgerät (10), und wobei das selbsttätige Steuern zumindest einer Eigenschaft der zumindest einen Ausbringöffnung für die Spritzflüssigkeit des einen oder der mehreren Ausbringelemente durch das landwirtschaftliche Spritzgerät (10) umfasst:
- selbsttätiges Ändern eines Zustands einer Blende, welche die Ausbringöffnung für die Spritzflüssigkeit eines Ausbringelements trägt, zur Änderung der Größe der Ausbringöffnung für die Spritzflüssigkeit, wobei die Blende als Irisblende ausgebildet ist.

## Claims

1. Method for applying a spray liquid to an agricultural area by means of an agricultural sprayer (10), comprising the steps of:
- providing a spray liquid to be applied at one or more application elements of the agricultural sprayer (10);
- automatically controlling the supply pressure (p) of the spray liquid at the one or more application elements during the application process by means of the agricultural sprayer (10); and
- automatically controlling the opening and closing times of the one or more application elements by pulse width modulation (PWM) by means of the agricultural sprayer (10), wherein the automatic control of the supply pressure of the spray liquid and the automatic control of the opening and closing times of the one or more application elements are carried out simultaneously and/or in coordination with one another by means of pulse width modulation,
wherein the automatic control of the supply pressure (p) of the spray liquid at the one or more application elements during the application process by means of the agricultural sprayer (10) comprises one, a plurality of or all of the following steps:
- setting a base value (pB) for the supply pressure (p) of the spray liquid at the one or more application elements;
- increasing, in particular temporarily increasing, the supply pressure (p) of the spray liquid at the one or more application elements above the base value (pB);
- decreasing, in particular temporarily decreasing, the supply pressure (p) of the spray liquid at the one or more application elements below the base value (pB);
wherein, for different application situations, different pressure regions to be maintained for the supply pressure (p) of the spray liquid at the one or more application elements can be specified, and the automatic control of the supply pressure (p) of the spray liquid at the one or more application elements in the relevant application situation is carried out by the agricultural sprayer (10) within the pressure region to be maintained specified for the application situation, wherein different application situations during the application of spray liquid arise in the middle of the agricultural area, at the edge of the agricultural area, or in the headland of the agricultural area, and wherein, for a requirement-oriented application of the spray liquid in some application situations, individual application elements or one or more groups of application elements must be deactivated to prevent incorrect application of the spray liquid, wherein the setting of suitable supply pressures of the spray liquid and suitable opening and closing times is carried out using map material, wherein the map material contains information about the agricultural area and in particular comprises an application map from which travel track information and/or plant position information can be derived,
wherein the one or more application elements each have at least one application opening for the spray liquid; **characterized by** the step of:
- automatically controlling at least one property of the at least one application opening for the spray liquid of the one or more application elements by means of the agricultural sprayer (10), and wherein the automatic control of at least one property of the at least one application opening for the spray liquid of the one or more application elements by means of the agricultural sprayer (10) comprises:
- automatically changing a state of a diaphragm which bears the application opening for the spray liquid of an application element, to change the size of the application opening for the spray liquid, wherein the diaphragm is an iris diaphragm.

2. Method according to claim 1,
**characterized in that** the pulse width modulation (PWM) by means of which the opening and closing times of the one or more application elements are automatically controlled comprises a frequency modulation.

3. Method according to claim 1 or 2,
**characterized in that** the automatic control of the supply pressure (p) of the spray liquid at the one or more application elements during the application process by means of the agricultural sprayer (10) and/or the automatic control of the opening and closing times of the one or more application elements by pulse width modulation (PWM) by means of the agricultural sprayer (10) is carried out depending on the travel speed (v) of the agricultural sprayer (10).

4. Method according to any of the preceding claims,
**characterized in that** the automatic control of the supply pressure (p) of the spray liquid at the one or more application elements during the application process by means of the agricultural sprayer (10) and/or the automatic control of the opening and closing times of the one or more application elements by pulse width modulation (PWM) by means of the agricultural sprayer (10) is carried out depending on a set application amount (M) of spray liquid and/or depending on properties of the spray liquid to be applied.

5. Method according to any of the preceding claims,
**characterized by** at least one of the following steps:
- providing an input possibility for the user of the agricultural sprayer (10) for specifying an application amount (M) of spray liquid;
- providing an input possibility for the user of the agricultural sprayer (10) for inputting properties of the spray liquid to be applied.

6. Method according to any of the preceding claims,
**characterized in that** a pressure region to be maintained for the supply pressure (p) of the spray liquid at the one or more application elements can be specified, and the automatic control of the supply pressure (p) of the spray liquid at the one or more application elements during the application process is carried out by the agricultural sprayer (10) within the pressure region to be maintained.

7. Method according to any of the preceding claims,
**characterized in that** the automatic control of the opening and closing times of the one or more application elements by pulse width modulation (PWM) by means of the agricultural sprayer (10) comprises one, a plurality of or all of the following steps:
- setting a basic modulation for the opening and closing times of the one or more application elements;
- changing, in particular temporarily changing, the opening time of the one or more application elements per period with respect to the opening time of the one or more application elements per period of the basic modulation;
- changing, in particular temporarily changing, the closing time of the one or more application elements per period with respect to the closing time of the one or more application elements per period of the basic modulation;
- changing, in particular temporarily changing, the period of the pulse width modulation (PWM) with respect to the period of the basic modulation;
- changing, in particular temporarily changing, the modulation frequency of the pulse width modulation (PWM) with respect to the modulation frequency of the basic modulation.

8. Agricultural sprayer (10), in particular field sprayer, designed to carry out the method for applying a spray liquid to an agricultural area according to any of the preceding claims, comprising
- one or more application elements for applying a spray liquid to an agricultural area; and
- a control device (24) which is designed to automatically control the supply pressure (p) of the spray liquid at the one or more application elements and the opening and closing times of the one or more application elements during the application process by means of pulse width modulation (PWM), wherein the automatic control of the supply pressure of the spray liquid and the automatic control of the opening and closing times of the one or more application elements are carried out simultaneously and/or in coordination with one another by means of pulse width modulation, wherein the automatic control of the supply pressure (p) of the spray liquid at the one or more application elements during the application process by means of the agricultural sprayer (10) comprises one, a plurality of or all of the following steps:
- setting a base value (pB) for the supply pressure (p) of the spray liquid at the one or more application elements;
- increasing, in particular temporarily increasing, the supply pressure (p) of the spray liquid at the one or more application elements above the base value (pB);
- decreasing, in particular temporarily decreasing, the supply pressure (p) of the spray liquid at the one or more application elements below the base value (pB) and wherein, for different application situations, different pressure regions to be maintained for the supply pressure (p) of the spray liquid at the one or more application elements can be specified, and the automatic control of the supply pressure (p) of the spray liquid at the one or more application elements in the relevant application situation is carried out by means of the agricultural sprayer (10) within the pressure region to be maintained specified for the application situation, wherein different application situations during the application of spray liquid arise in the middle of the agricultural area, at the edge of the agricultural area, or in the headland of the agricultural area, and wherein, for a requirement-oriented application of the spray liquid in some application situations, individual application elements or one or more groups of application elements must be deactivated to prevent incorrect application of the spray liquid, wherein the setting of suitable supply pressures of the spray liquid and suitable opening and closing times is carried out using map material, wherein the map material contains information about the agricultural area and in particular comprises an application map from which travel track information and/or plant position information can be derived,
wherein the one or more application elements each have at least one application opening for the spray liquid; **characterized by** the step of:
- automatically controlling at least one property of the at least one application opening for the spray liquid of the one or more application elements by means of the agricultural sprayer (10), and wherein the automatic control of at least one property of the at least one application opening for the spray liquid of the one or more application elements by means of the agricultural sprayer (10) comprises:
- automatically changing a state of a diaphragm which bears the application opening for the spray liquid of an application element, to change the size of the application opening for the spray liquid, wherein the diaphragm is an iris diaphragm.

## Revendications

1. Procédé pour l'épandage d'un liquide de pulvérisation sur une surface agricole utile au moyen d'un appareil de pulvérisation agricole (10), comportant les étapes consistant à :
- fournir un liquide de pulvérisation à épandre au niveau d'un ou de plusieurs éléments d'épandage de l'appareil de pulvérisation agricole (10) ;
- commander automatiquement la pression de fourniture (p) du liquide de pulvérisation au niveau du ou des éléments d'épandage pendant le processus d'épandage par l'appareil de pulvérisation agricole (10) ; et
- commander automatiquement les temps d'ouverture et de fermeture du ou des éléments d'épandage au moyen d'une modulation de largeur d'impulsions (MLI) par l'appareil de pulvérisation agricole (10), dans lequel la commande automatique de la pression de fourniture du liquide de pulvérisation et la commande automatique des temps d'ouverture et de fermeture du ou des éléments d'épandage sont effectuées simultanément et/ou en coordination l'une avec l'autre au moyen de la modulation de largeur d'impulsions,
dans lequel la commande automatique de la pression de fourniture (p) du liquide de pulvérisation au niveau du ou des éléments d'épandage pendant le processus d'épandage par l'appareil de pulvérisation agricole (10) comprend une, plusieurs ou la totalité des étapes suivantes :
- réglage d'une valeur de base (pB) pour la pression de fourniture (p) du liquide de pulvérisation au niveau du ou des éléments d'épandage ;
- augmentation, en particulier augmentation temporaire, de la pression de fourniture (p) du liquide de pulvérisation au niveau du ou des éléments d'épandage au-delà de la valeur de base (pB) ;
- diminution, en particulier diminution temporaire, de la pression de fourniture (p) du liquide de pulvérisation au niveau du ou des éléments d'épandage en dessous de la valeur de base (pB) ;
dans lequel, pour différentes situations d'épandage, différentes plages de pression à maintenir pour la pression de fourniture (p) du liquide de pulvérisation au niveau du ou des éléments d'épandage peuvent être prédéfinies, et la commande automatique de la pression de fourniture (p) du liquide de pulvérisation au niveau du ou des éléments d'épandage est effectuée, dans la situation d'épandage respective, par l'appareil de pulvérisation agricole (10) dans la plage de pression à maintenir prédéfinie pour la situation d'épandage, dans lequel différentes situations d'épandage se présentent pendant l'épandage du liquide de pulvérisation, au milieu de la surface agricole utile, en bordure de la surface agricole utile ou en bout de champ de la surface agricole utile, et dans lequel, pour un épandage du liquide de pulvérisation adapté aux besoins, dans certaines situations d'épandage, certains éléments d'épandage ou un ou plusieurs groupes d'éléments d'épandage doivent être désactivés afin d'empêcher un épandage intempestif du liquide de pulvérisation, dans lequel le réglage de pressions de fourniture appropriées du liquide de pulvérisation et de temps d'ouverture et de fermeture appropriés est effectué à l'aide de matériel cartographique, dans lequel le matériel cartographique contient des informations concernant la surface agricole utile, en particulier comprend une carte d'application à partir de laquelle des informations de traces de déplacement et/ou des informations de position des plantes peuvent être déduites,
dans lequel le ou les éléments d'épandage présentent respectivement au moins une ouverture d'épandage pour le liquide de pulvérisation ; **caractérisé par** l'étape consistant à :
- commander automatiquement au moins une caractéristique de l'au moins une ouverture d'épandage pour le liquide de pulvérisation du ou des éléments d'épandage par l'appareil de pulvérisation agricole (10), et dans lequel la commande automatique d'au moins une caractéristique de l'au moins une ouverture d'épandage pour le liquide de pulvérisation du ou des éléments d'épandage par l'appareil de pulvérisation agricole (10) comprend :
- la modification automatique d'un état d'un diaphragme soutenant l'ouverture d'épandage pour le liquide de pulvérisation d'un élément d'épandage, pour la modification de la taille de l'ouverture d'épandage pour le liquide de pulvérisation, dans lequel le diaphragme est conçu en tant que diaphragme à iris.

2. Procédé selon la revendication 1,
**caractérisé en ce que** la modulation de largeur d'impulsions (MLI), au moyen de laquelle les temps d'ouverture et de fermeture du ou des éléments d'épandage sont commandés automatiquement, comprend une modulation de fréquence.

3. Procédé selon la revendication 1 ou 2,
**caractérisé en ce que** la commande automatique de la pression de fourniture (p) du liquide de pulvérisation au niveau du ou des éléments d'épandage pendant le processus d'épandage par l'appareil de pulvérisation agricole (10) et/ou la commande automatique des temps d'ouverture et de fermeture du ou des éléments d'épandage sont effectuées au moyen de la modulation de largeur d'impulsions (MLI) par l'appareil de pulvérisation agricole (10) en fonction de la vitesse de déplacement (v) de l'appareil de pulvérisation agricole (10).

4. Procédé selon l'une des revendications précédentes,
**caractérisé en ce que** la commande automatique de la pression de fourniture (p) du liquide de pulvérisation au niveau du ou des éléments d'épandage pendant le processus d'épandage par l'appareil de pulvérisation agricole (10) et/ou la commande automatique des temps d'ouverture et de fermeture du ou des éléments d'épandage au moyen de la modulation de largeur d'impulsions (MLI) par l'appareil de pulvérisation agricole (10) sont effectuées en fonction d'une quantité d'épandage (M) réglée de liquide de pulvérisation et/ou en fonction de propriétés du liquide de pulvérisation à épandre.

5. Procédé selon l'une des revendications précédentes,
**caractérisé par** au moins l'une des étapes suivantes :
- fourniture d'une possibilité de saisie à l'utilisateur de l'appareil de pulvérisation agricole (10) pour la prédéfinition d'une quantité d'épandage (M) de liquide de pulvérisation ;
- fourniture d'une possibilité de saisie à l'utilisateur de l'appareil de pulvérisation agricole (10) pour l'entrée de propriétés du liquide de pulvérisation à épandre.

6. Procédé selon l'une des revendications précédentes,
**caractérisé en ce qu'**une plage de pression à maintenir pour la pression de fourniture (p) du liquide de pulvérisation au niveau du ou des éléments d'épandage peut être prédéfinie et la commande automatique de la pression de fourniture (p) du liquide de pulvérisation au niveau du ou des éléments d'épandage pendant le processus d'épandage par l'appareil de pulvérisation agricole (10) est effectuée dans la plage de pression à maintenir.

7. Procédé selon l'une des revendications précédentes,
**caractérisé en ce que** la commande automatique des temps d'ouverture et de fermeture du ou des éléments d'épandage au moyen d'une modulation de largeur d'impulsions (MLI) par l'appareil de pulvérisation agricole (10) comprend une, plusieurs ou toutes les étapes suivantes :
- réglage d'une modulation de base pour les temps d'ouverture et de fermeture du ou des éléments d'épandage ;
- modification, en particulier modification temporaire, du temps d'ouverture du ou des éléments d'épandage par période par rapport au temps d'ouverture du ou des éléments d'épandage par période de la modulation de base ;
- modification, en particulier modification temporaire, du temps de fermeture du ou des éléments d'épandage par période par rapport au temps de fermeture du ou des éléments d'épandage par période de la modulation de base ;
- modification, en particulier modification temporaire, de la période de la modulation de largeur d'impulsions (MLI) par rapport à la période de la modulation de base ;
- modification, en particulier modification temporaire, de la fréquence de modulation de la modulation de largeur d'impulsions (MLI) par rapport à la fréquence de modulation de la modulation de base.

8. Appareil de pulvérisation agricole (10), en particulier pulvérisateur agricole, conçu pour la mise en œuvre du procédé permettant l'épandage d'un liquide de pulvérisation sur une surface agricole utile selon l'une des revendications précédentes, comportant
- un ou plusieurs éléments d'épandage permettant l'épandage d'un liquide de pulvérisation sur une surface agricole utile ; et
- un dispositif de commande (24) qui est configuré pour commander automatiquement la pression de fourniture (p) du liquide de pulvérisation au niveau du ou des éléments d'épandage et les temps d'ouverture et de fermeture du ou des éléments d'épandage au moyen d'une modulation de largeur d'impulsions (MLI) pendant le processus d'épandage, dans lequel la commande automatique de la pression de fourniture du liquide de pulvérisation et la commande automatique des temps d'ouverture et de fermeture du ou des éléments d'épandage au moyen de la modulation de largeur d'impulsions sont effectuées simultanément et/ou en coordination l'une avec l'autre, dans lequel la commande automatique de la pression de fourniture (p) du liquide de pulvérisation au niveau du ou des éléments d'épandage pendant le processus d'épandage par l'appareil de pulvérisation agricole (10) comprend une, plusieurs ou la totalité des étapes suivantes :
- réglage d'une valeur de base (pB) pour la pression de fourniture (p) du liquide de pulvérisation au niveau du ou des éléments d'épandage ;
- augmentation, en particulier augmentation temporaire, de la pression de fourniture (p) du liquide de pulvérisation au niveau du ou des éléments d'épandage au-delà de la valeur de base (pB) ;
- réduction, en particulier réduction temporaire, de la pression de fourniture (p) du liquide de pulvérisation au niveau du ou des éléments d'épandage en dessous de la valeur de base (pB), et dans lequel, pour différentes situations d'épandage, différentes plages de pression à maintenir pour la pression de fourniture (p) du liquide de pulvérisation au niveau du ou des éléments d'épandage peuvent être prédéfinies et la commande automatique de la pression de fourniture (p) du liquide de pulvérisation au niveau du ou ded éléments d'épandage, dans la situation d'épandage respective, par l'appareil de pulvérisation agricole (10) est effectuée dans la plage de pression à maintenir prédéfinie pour la situation d'épandage, dans lequel différentes situations d'épandage se présentent pendant l'épandage du liquide de pulvérisation, au milieu de la surface agricole utile, en bordure de la surface agricole utile ou en bout de champ de la surface agricole utile, et dans lequel, pour un épandage du liquide de pulvérisation adapté aux besoins, dans certaines situations d'épandage, certains éléments d'épandage ou un ou plusieurs groupes d'éléments d'épandage doivent être désactivés afin d'empêcher un épandage intempestif du liquide de pulvérisation, dans lequel le réglage de pressions de fourniture appropriées du liquide de pulvérisation et de temps d'ouverture et de fermeture appropriés est effectué à l'aide de matériel cartographique, dans lequel le matériel cartographique contient des informations concernant la surface agricole utile, en particulier comprend une carte d'application à partir de laquelle des informations de traces de déplacement et/ou des informations de position des plantes peuvent être déduites,
dans lequel le ou les éléments d'épandage présentent respectivement au moins une ouverture d'épandage pour le liquide de pulvérisation ; **caractérisé par** l'étape consistant à :
- commander automatiquement au moins une caractéristique de l'au moins une ouverture d'épandage pour le liquide de pulvérisation du ou des éléments d'épandage par l'appareil de pulvérisation agricole (10), et dans lequel la commande automatique d'au moins une caractéristique de l'au moins une ouverture d'épandage pour le liquide de pulvérisation du ou des éléments d'épandage par l'appareil de pulvérisation agricole (10) comprend :
- la modification automatique d'un état d'un diaphragme soutenant l'ouverture d'épandage pour le liquide de pulvérisation d'un élément d'épandage, pour la modification de la taille de l'ouverture d'épandage pour le liquide de pulvérisation, dans lequel le diaphragme est conçu en tant que diaphragme à iris.
